# EUROPEAN PATENT APPLICATION

(11) **EP 4 443 034 A1**
(43) Date of publication of application: **09.10.2024**
(21) Application number: 24166750.0
(22) Date of filing: 27.03.2024
(51) Int. Cl.: F16K 1/38, F16K 1/50, F16K 1/54, F16K 31/50, F16K 31/528, F16K 1/30

(54) **FLOW RATE REGULATING VALVE**

(30) Priority: 05.04.2023 JP 2023061124
(71) Applicant: Tatsuno Corporation, Tokyo 108-0073 (JP)
(72) Inventor: TAKEZAWA, Masahiro, Tokyo, 108-0073 (JP)
(74) Representative: Isarpatent

(57) **Abstract**

[OBJECT] To provide a flow rate regulating valve that is capable of highly accurate control when a flow rate is small, and supplying gaseous fuel at a large flow rate.

[SOLUTION] A flow rate regulating valve 30 according to the present invention includes: a main body 2 having a small-diameter flow path 3A, a tapered flow path 3AT continuous with the small-diameter flow path 3A, and a large-diameter flow path 3B continuous with the tapered flow path 3AT; a shaft 1 having a small-diameter tip 1A that can be inserted into the small-diameter flow path 3A from the large-diameter flow path 3B side of the main body 2, and a tapered portion 1AT continuous with the small-diameter tip 1A; an opening adjustment rotating member 4; and a conversion mechanism 5 that converts rotation of the opening adjustment rotating member 4 into movement in an axial direction of the shaft 1, wherein when the small-diameter tip 1A of the shaft 1 is inserted into the small-diameter flow path 3A of the main body 2, a gap δ is formed between an outer circumferential surface of the small-diameter tip 1A and an inner circumferential surface of the small-diameter flow path 3A, and an outer circumferential surface of the tapered portion 1AT of the shaft 1 is configured to be engageable with an inner circumferential surface of the tapered flow path 3AT of the main body 2.

## Description

### BACKGROUND

### 1. Field of the Invention

The present invention relates to a flow rate regulating valve suitably used in a filling device for filling hydrogen gas into a tank of a fuel cell vehicle (FCV) and others.

### 2. Description of the Related Art

As one measure to address environmental problems in recent years, FCVs that use hydrogen gas as fuel and equipment related thereto have been actively developed. In order to promote the spread of the FCVs, a device that can stably fill hydrogen gas into an FCV is required. The applicant has already proposed such a hydrogen filling device, for example in JP-A-2021-139390, and in the gazette is disclosed a flow rate regulating valve that is installed in a hydrogen supply pipe and controls the flow rate of hydrogen gas based on a signal from a control device.

In addition, another flow rate regulating valve which is proposed in JP-A-2021-196001 includes a flow path formed in a main body to communicate an inflow port and an outflow port, a valve seat formed in the flow path, a valve body that contacts with and separates from the valve seat to open and close the flow path, and an actuator for moving the valve body. In this flow rate regulating valve, a rotating shaft of a stepping motor in the actuator is connected to a ball screw, and the ball screw is disposed in a slider that is movable up and down in a cylindrical upper cover, and a rotational motion of the motor is converted into a linear motion of the slider. With this configuration, opening/closing control can be performed reliably even when a working fluid is at high pressure.

In the above-mentioned flow rate regulating valve, however, the cross-sectional area of the flow path suddenly increases and the flow rate increases the moment the valve body separates from the valve seat, it is therefore difficult to control the valve opening or flow rate especially when a small flow rate of hydrogen is required. Here, it is possible to control the flow rate with high precision by restricting the flow rate, but when filling with gaseous fuel such as hydrogen, there is a desire to finish the filling as quickly as possible, which necessitates to fill with a large flow rate. No flow rate regulating valve has yet been proposed that can perform highly accurate control even at a small flow rate and can meet the demand for gaseous fuel supply at a large flow rate.

The contents of JP-A-2021-139390 gazette and JP-A-2021-196001 are incorporated herein by reference in their entirety.

### BRIEF SUMMARY

The present invention has been proposed in view of the problems of the prior art described above, and an object thereof is to provide a flow rate regulating valve that is capable of highly accurate control even when the flow rate is small, and supplying gaseous fuel, etc., at a large flow rate.

A flow rate regulating valve 30 according to the present invention is characterized by including: a main body 2 having a small-diameter flow path 3A, a tapered flow path 3AT continuous with the small-diameter flow path 3A, and a large-diameter flow path 3B continuous with the tapered flow path 3AT; a shaft 1 having a small-diameter tip 1A that can be inserted into the small-diameter flow path 3A from the large-diameter flow path 3B side of the main body 2, and a tapered portion 1AT continuous with the small-diameter tip 1A; an opening adjustment rotating member 4; and a conversion mechanism 5 that converts rotation of the opening adjustment rotating member 4 into movement in an axial direction of the shaft 1, wherein when the small-diameter tip 1A of the shaft 1 is inserted into the small-diameter flow path 3A of the main body 2, a gapδis formed between an outer circumferential surface of the small-diameter tip 1A and an inner circumferential surface of the small-diameter flow path 3A, and an outer circumferential surface of the tapered portion 1AT of the shaft 1 is configured to be engageable with an inner circumferential surface of the tapered flow path 3AT of the main body 2.

In the flow rate regulating valve 30, the conversion mechanism 5 preferably includes a threaded portion 5A between a female thread 4C formed on the opening adjustment rotation member 4 and a male thread 1C formed on the shaft 1.

It is preferable that the flow rate regulating valve 30 further includes a co-rotation prevention mechanism 6 (a co-rotation prevention member 6A and a co-rotation prevention bolt 6B) that prevents the shaft 1 from co-rotating with the opening adjustment rotating member 4 when the opening adjustment rotating member 4 is rotated.

It is preferable that the flow rate regulating valve 30 further includes a rapid opening adjustment member (a rapid opening adjustment button) 7 that moves the shaft 1 toward the small-diameter tip 1A.

According to the flow rate regulating valve 30 of the present invention with the above construction, the tapered portion 1AT adjacent to the small-diameter tip 1A constitutes a valve body, and the tapered flow path 3AT adjacent to the small-diameter flow path 3A formed in the main body 2 constitutes a valve seat, and the valve 30 is closed when the outer circumferential surface of the tapered portion 1AT engaging with the inner circumferential surface of the tapered flow path 3AT, and the valve 30 opens when the outer circumferential surface of the tapered portion 1AT separates from the inner circumferential surface of the inner circumferential surface of the tapered flow path 3AT.

Here, the gap δ exists between the outer circumferential surface of the small-diameter tip 1A and the inner circumferential surface of the small-diameter flow path 3A. When the small-diameter tip 1A is inserted into the small-diameter flow path 3A with the flow rate adjustment valve 30 open, a gaseous fuel flows through the gap δ. The gap δ is minute, and if the distance that the gaseous fuel flows through the gap δ, that is, a shaft axial length Lt, is long, the flow path resistance will be large and the gaseous fuel flow rate will be small, but if the distance is short, the flow path resistance will be small and the flow rate of the gaseous fuel will increase.

According to the present invention, the flow rate of the gaseous fuel flowing through the gap δ can be precisely fine-tuned by adjusting the length of the gaseous fuel flowing through the gap δ, that is, the length in which the small-diameter tip 1A is inserted into the small-diameter flow path 3A.

Furthermore, since the conversion mechanism 5 that converts the rotation of the opening adjustment rotating member 4 into axial movement of the shaft 1 is provided, the shaft 1 can be moved in the axial direction by rotating the opening adjustment rotation member 4, which allows the length Lt of the small-diameter tip 1A inserted into the small-diameter flow path 3A, that is, the distance through which the gaseous fuel flows through the gap δ to be adjusted. Since this mechanism constitutes a mechanism that converts the rotation of a screw into movement in the axial direction of the screw, even if the amount of rotation of the opening adjustment rotating member 4 is large, the amount of movement of the shaft 1 in its axial direction does not become large, so that the amount of movement of the shaft 1 can be finely adjusted.

When flowing through the gap δ, the gaseous fuel has a small flow rate because the flow path resistance of the gap δ is large, and fine adjustment in the small flow rate region can be easily and reliably performed. Further, even if the tapered portion 1AT is separated from the tapered flow path 3AT, the gaseous fuel flows through the gap δ where the resistance of the tapered flow path 3AT is large. Therefore, according to the flow rate regulating valve 30 of the present invention, a large amount of gaseous fuel is prevented from flowing at the moment of opening.

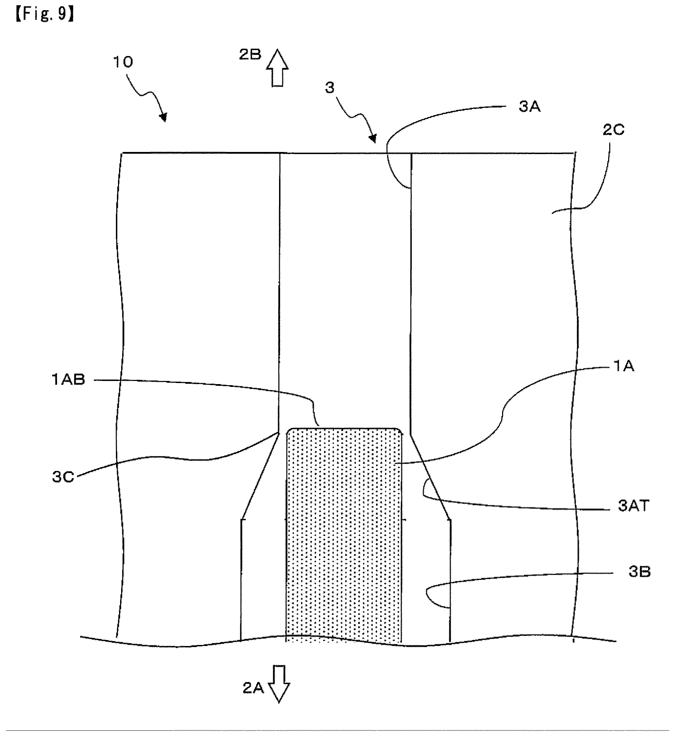

Here, from the state where the flow rate regulating valve 30 of the present invention is closed, through the state where a small flow rate of hydrogen flows through the gap δ, to the state where the hydrogen flow rate rapidly increases, flow rate adjustment is performed by the movement of the small-diameter tip 1A in a direction away from the small-diameter flow path 3A. That is, according to the present invention, the transition from the closed state to the small flow rate state to the large flow rate state is continuously performed by an operation of moving the small-diameter tip 1A in a direction to remove it from the small-diameter flow path 3A. As a result, according to the flow rate adjustment valve 30, hydrogen flows at a small flow rate when the valve is opened, the flow rate gradually increases, and after a certain state (the state shown in Fig. 9), the flow rate increases rapidly.

When the differential pressure between the container to be filled with gaseous fuel (25: for example, a hydrogen tank of an FCV) and a gaseous fuel supply tank 21 decreases at filling, it is necessary to switch the gaseous fuel supply tank to an ultra-high-pressure tank 22. When switching to the ultra-high-pressure tank 22, the opening degree of the flow rate regulating valve 30 should be decreased to reduce the flow rate of gaseous fuel.

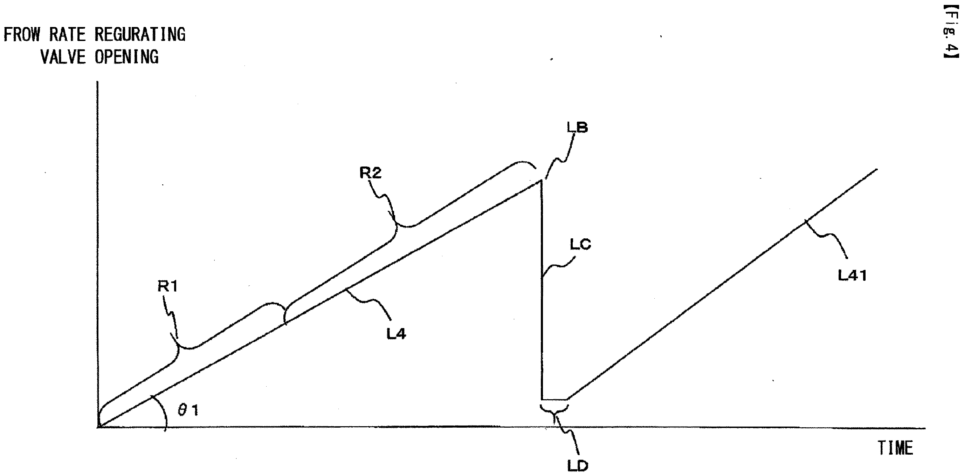

In the present invention, if the rapid opening adjustment member (opening rapid adjustment button) 7 is provided, pressing the rapid opening adjustment member 7 toward a flow path adjustment section 10 in the shaft axial direction (a region LC in Fig. 4) enables the entire shaft 1 to move toward the flow path adjustment section 10 in the axial direction of the shaft together with the opening adjustment dial 4 screwed together at a base 1B. As a result, the length of the small-diameter tip 1A inserted into the small-diameter flow path 3A increases, and the flow path resistance increases, which decreases the flow rate from the flow rate regulating valve 30 (a region LD in Fig. 4). That is, according to the present invention, pressing the opening degree rapid adjustment member 7 toward the flow path adjustment section 10 side in the shaft axial direction allows the flow rate from the flow rate adjustment valve 30 to be sharply reduced, and the gaseous fuel supply tank can be replaced safely and smoothly.

### BRIEF DESCRIPTION OF THE DRAWINGS

[Figure 1] A schematic diagram for explaining how to fill an FCV tank with hydrogen gas.
[Figure 2] A diagram showing the characteristics of FCV tank pressure versus time.
[Figure 3] A diagram showing a desirable flow rate adjustment valve opening-hydrogen flow rate characteristic when filling an FCV with hydrogen gas.
[Figure 4] A diagram illustrating an example of time-flow rate adjustment valve opening characteristic in filling hydrogen into an FCV.
[Figure 5] A sectional view showing a flow rate regulating valve according to the first embodiment of the present invention when it is closed.
[Figure 6] An enlarged cross-sectional view showing relative position of a small-diameter tip and a small-diameter flow path of the flow rate regulating valve shown in Fig. 5.
[Figure 7] A sectional view showing a state in which the flow rate regulating valve is supplying a small flow rate.
[Figure 8] An enlarged cross-sectional view showing the relative position of the small-diameter tip and the small-diameter flow path of the flow rate regulating valve shown in Fig. 7.
[Figure 9] An enlarged cross-sectional view showing the relative position of the small-diameter tip and the small-diameter flow path at the boundary between a state in which the flow rate regulating valve supplies a small flow rate and a state in which it supplies a large flow rate.
[Figure 10] A sectional view showing a state in which the flow rate regulating valve supplies a large flow rate.
[Figure 11] An enlarged sectional view showing the relative position of the small-diameter tip and the small-diameter flow path of the flow rate regulating valve shown in Fig. 10.
[Figure 12] A sectional view showing a state in which an opening rapid adjustment button is pressed to move the entire shaft toward a flow path adjustment section from the state in which the large flow rate shown in Fig. 10 is being supplied.
[Figure 13] A sectional view showing a flow rate regulating valve according to the second embodiment of the present invention when it is closed.

### DETAILED DESCRIPTION

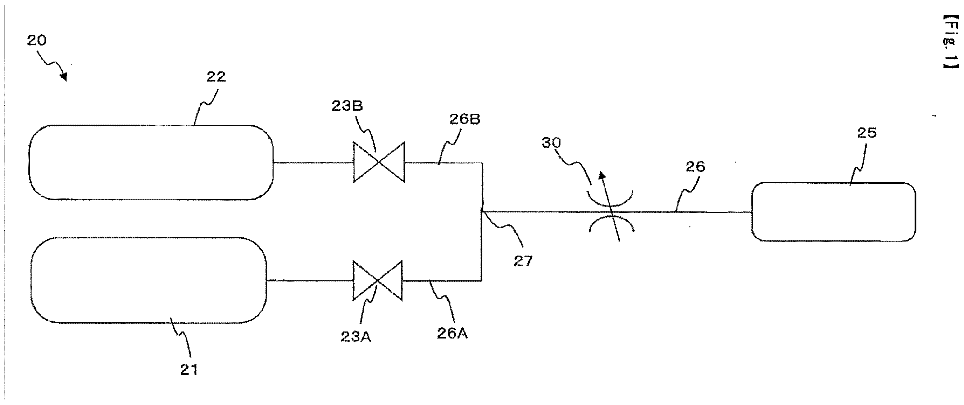

Embodiments of the present invention will be described below with reference to the accompanying drawings. In the illustrated embodiment, an example will be described in which an FCV is filled with hydrogen as gaseous fuel using a hydrogen filling device as a filling device. First, with reference to Figs. 1 to 3, functions of the flow rate regulating valve 30 during hydrogen filling will be described.

In Fig. 1, a hydrogen gas supply tank 20 side is comprised of a high-pressure tank 21 and an ultra-high-pressure tank 22. The hydrogen gas supply tank 20 (21, 22) is connected to a fuel tank 25 of a fuel cell vehicle FCV via a hydrogen pipe 26, and a flow rate regulating valve 30 is interposed in the hydrogen pipe 26.

In the hydrogen pipe 26, a hydrogen pipe 26A connected to the high-pressure tank 21 and a hydrogen pipe 26B connected to the ultra-high-pressure tank 22 merge at a merging point 27. Switching on/off valves 23A, 23B are installed in the hydrogen pipes 26A, 26B, respectively.

When filling with hydrogen gas, the fuel tank 25 and the high-pressure tank 21 are initially communicated with each other, and when the pressure difference between the fuel tank 25 and the high-pressure tank 21 decreases, the high-pressure tank 21 is switched to the ultra-high-pressure tank 22. When switching the high-pressure tank 21 to the ultra-high-pressure tank 22, operate the switching valves 23A and 23B, and at the beginning of switching, reduce the opening degree of the flow rate adjustment valve 30 to reduce the flow rate of hydrogen gas in the flow rate adjustment valve 30. In Fig. 1, illustration of the hydrogen filling device is omitted.

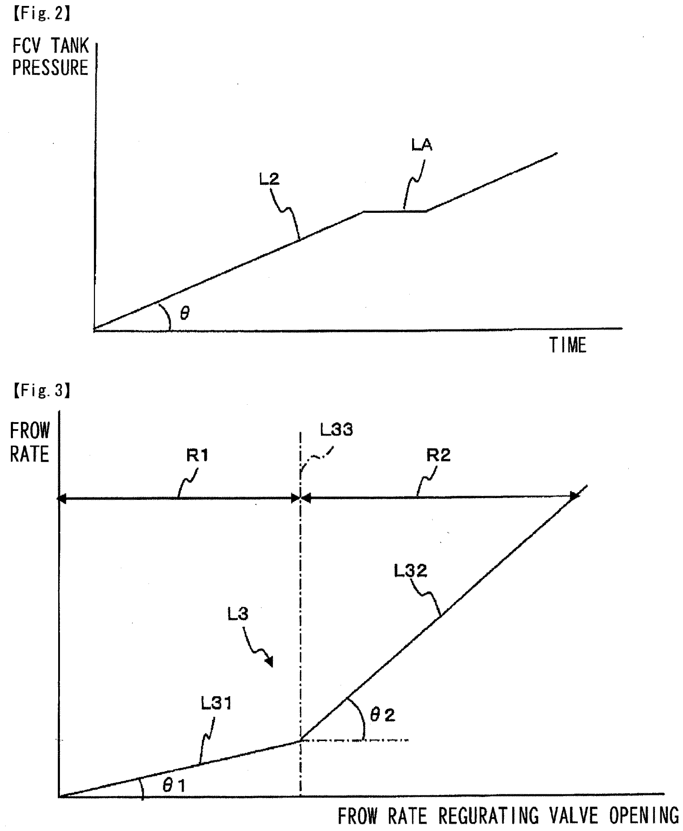

In the hydrogen filling described with reference to Fig. 1, the characteristic of the pressure of the fuel tank 25 versus time is shown as a characteristic line L2 in Fig. 2. When the slope θ in the characteristic line L2 is large, a rapid pressure change (increase) has occurred, and the filling speed becomes faster, but the possibility of damage to the fuel tank 25 and the hydrogen pipe 26 shown in Fig. 1 increases.

On the other hand, when filling with hydrogen gas, there is a demand to perform hydrogen filling at high speed in order to finish filling as early as possible, and as far as related equipment allows in terms of pressure resistance, durability, etc. To meet this request, it is necessary to control the hydrogen flow rate (for example, mass flow rate) with high precision, and the flow rate adjustment valve 30 (Fig. 1) is provided to perform this control.

An area LA in the characteristic line L2 shown in Fig. 2 indicates an area where the hydrogen gas supply side described above is switched from the high-pressure tank 21 to the ultra-high-pressure tank 22.

In Fig. 3, the characteristics of the opening degree of the flow rate adjustment valve and the hydrogen flow rate are shown by a characteristic line L3, and after the opening degree of the flow rate adjustment valve is opened from the closed state (the origin in Fig. 3), the opening degree gradually increases (a region near the origin in Fig. 3). Then, a small flow rate region R1 in which the opening degree is small shifts to a large flow rate region R2 in which the opening degree increases.

In Fig. 3, a slope θ2 of a characteristic line L32 in the large flow rate region R2 is larger than a slope θ1 of a characteristic line L31 in the small flow rate region R1. Reducing the slope θ1 of the characteristic line L31 allows pressure increase in the small flow rate region R1 to be reduced, thereby damage to the fuel tank 25 of the FCV and various pipes can be reduced. Further, if the slope θ2 of the characteristic line L32 is large, the hydrogen flow rate becomes large, which meets the demand for high-speed hydrogen filling.

Here, the hydrogen supply system (including related equipment such as the fuel tank 25 of the FCV) is likely to be damaged in the small flow rate region R1, especially immediately after the flow rate adjustment valve 30 is opened.

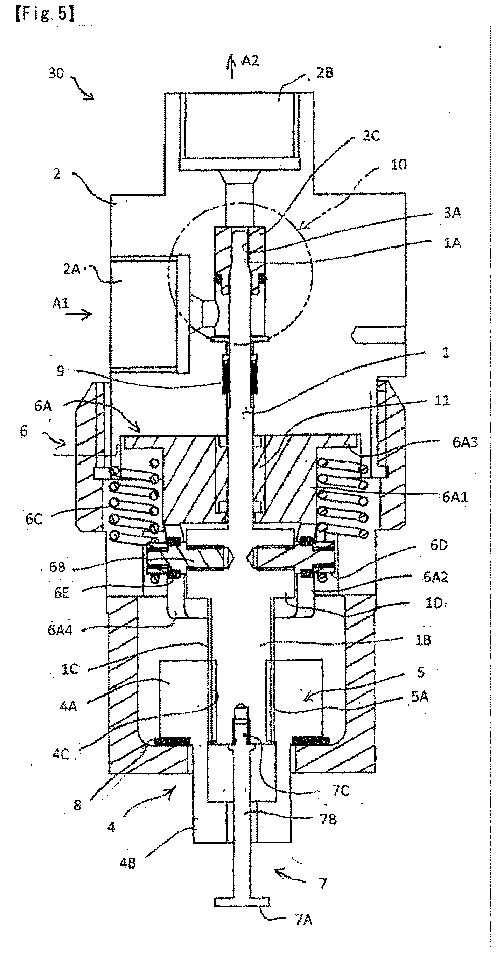

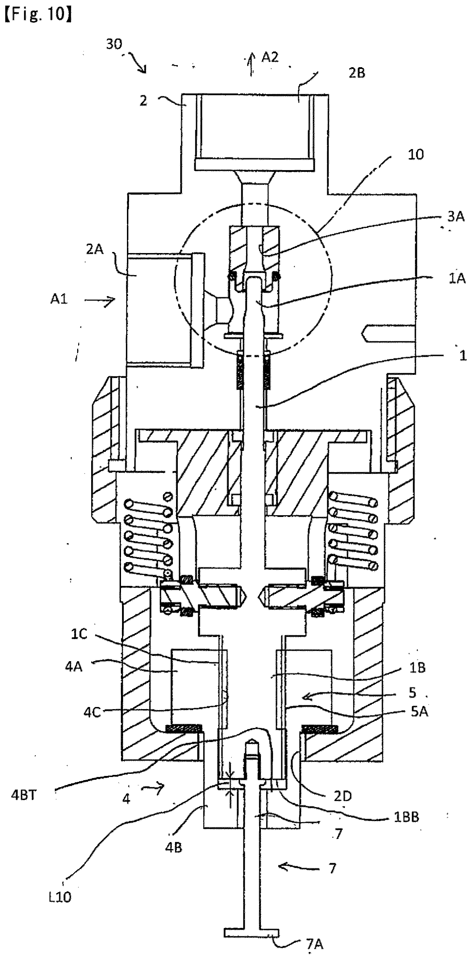

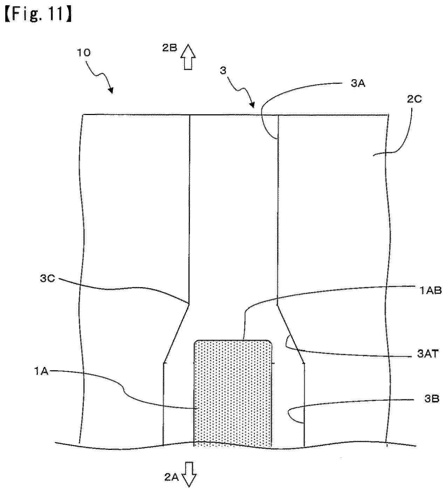

Regarding the flow rate adjustment valve 30 shown in Figs. 5 to 13 according to the illustrated embodiment, the operation of the flow rate adjustment valve in the small flow rate region R1 will be explained with reference to Figs. 5 to 9, and the operation thereof in the large flow rate region R2 will be explained with reference to Figs. 10 and 11.

In Fig. 3, a reference numeral L33 is the boundary between the small flow rate region R1 and the large flow rate region R2, and in the illustrated embodiment, the state indicated by the reference numeral L33 in Fig. 3 will be described later with reference to Fig. 9.

In Fig. 4, in a characteristic line L4 illustrating time characteristic of opening of the flow rate adjustment valve 30 during hydrogen filling, the opening linearly increases with the slope θ1 from immediately after the start of filling until a time LB. As described above, immediately after the start of filling, hydrogen gas is supplied at a small flow rate (the small flow rate region R1), and then hydrogen gas is supplied at a large flow rate (the large flow rate region R2). Here, there is a possibility that the slope in the large flow rate region R2 changes from the slope θ1 in the small flow rate region R1 and becomes larger, but for the sake of simplification, in the characteristic line L4 in Fig. 4, the small flow rate region R1 and the large flow rate region R2 are expressed by a straight line with the same slope θ1.

In Fig. 4, regions indicated by symbols LC and LD indicate timing of switching from the high-pressure tank 21 to the ultra-high-pressure tank 22. In the region indicated by the symbol LC, the valve opening degree is rapidly decreased in order to switch the tank. Then, after passing through the region LD for tank switching, the fuel tank 25 of the FCV is filled with hydrogen from the ultra-high-pressure tank 22, and the opening degree of the flow rate regulating valve 30 increases linearly according to the characteristic line L41. The characteristics shown in Figs. 3 and 4 are realized by the flow rate regulating valve 30 according to the illustrated embodiment.

The first embodiment of the present invention will be described with reference to Figs. 5 to 11. In Fig. 5, the flow rate adjustment valve according to the first embodiment is indicated by the reference numeral 30 as a whole, and the valve 30 includes a shaft 1 having a small-diameter tip 1A, a main body 2 in which a small-diameter flow path 3A is formed, an opening adjustment rotating member (an opening adjustment dial) 4 and a conversion mechanism 5 that converts rotation of the opening adjustment rotating member 4 into movement in an axial direction of the shaft 1.

The shaft 1 has the small-diameter tip 1A located in the flow path adjustment section 10 (the area indicated by the two-dot chain line in Fig. 5) on the tip side (upper side in Fig. 5), and a base 1B located near the other end (lower end in Fig. 5) of the small-diameter tip 1A, and is movable in the axial direction (in the vertical direction in Fig. 5) within the space formed in the main body 2. A flow path forming portion, which constitutes a part of the main body 2 and is a region in which the flow path 3A into which the small-diameter tip 1A is inserted, is formed is indicated by a reference numeral 2C in Fig. 5.

The opening adjustment dial 4 is a hollow member, and is configured by connecting a shaft fitting portion 4A and a dial operating portion 4B, which are cylindrical members having different diameters in the direction of the shaft center axis. The opening adjustment dial 4 is arranged at an end of the flow rate adjustment valve 30 on the opposite side to the flow path adjustment section 10 (lower side in Fig. 5).

A female thread 4C is formed on an inner circumferential surface of the shaft fitting portion 4A of the opening adjustment dial 4, and is threadedly engaged with a male thread 1C formed on the base portion 1B to form a threaded portion 5A. The threaded portion 5A constitutes a conversion mechanism 5 that converts rotation of the opening adjustment dial 4 into axial movement of the shaft 1. The conversion mechanism 5 is a mechanism that has a function of converting rotational motion (rotation of a screw) into linear motion (movement of a screw in the axial direction), and in the illustrated embodiment is configured by a screw mechanism.

The dial operating portion 4B of the opening adjustment dial 4 is arranged to protrude from the main body 2 (downward in Fig. 5). When the dial operation section 4B is rotated, the rotation of the dial operation section 4B is converted into a movement of the shaft 1 in the shaft axial direction (up and down direction in Fig. 5) at the screwing section 5A. As a result, the shaft 1 moves up and down. In order to smoothly rotate the opening adjustment dial 4, the lower end of the shaft fitting portion 4A of the opening adjustment dial 4 is supported by a thrust bearing 8 inside the main body 2 of the flow rate adjustment valve 30. Therefore, even if the opening adjustment dial 4 is pressed in the shaft axial direction, it can rotate smoothly. The opening adjustment dial 4 is operated manually, but it can also be rotated by means such as a motor.

A hydrogen gas supplied from the high-pressure tank 21 (or ultra-high-pressure tank 22: see Fig. 1) flows into the main body 2 from the hydrogen inlet 2A (arrow A1), flows through the flow path adjustment section 10, and flows through the outlet 2B (arrow A2). Then, hydrogen gas is filled into the fuel tank 25 (Fig. 1) of an FCV via a filling nozzle (not shown) of the hydrogen filling device. In the flow path adjustment section 10, the valve opening degree (or hydrogen gas flow rate) of the flow rate adjustment valve 30 is finely adjusted from the start of hydrogen gas filling by the axial position of the shaft 1 (small-diameter tip 1A), and the pressure and flow rate are controlled.

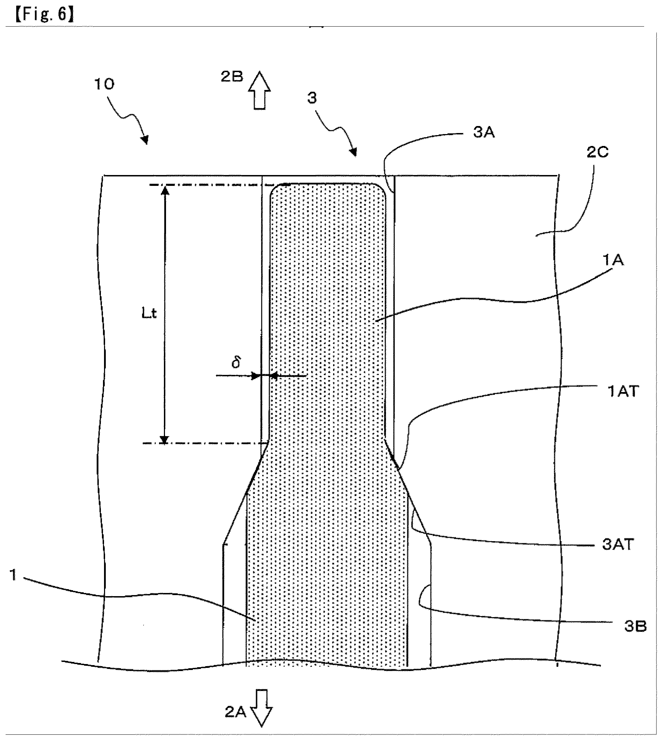

In the flow path adjustment section 10, when the shaft 1 moves upward, the small-diameter tip 1A is inserted into the small-diameter flow path 3A (see Fig. 6) formed in the main body 2, and an axial length of the small-diameter tip 1A inserted into the small-diameter flow path 3A becomes longer. On the other hand, in the flow path adjustment section 10, when the shaft 1 moves downward, an axial length of the small-diameter tip 1A inserted into the small-diameter flow path 3A (see Fig. 6) becomes smaller, and furthermore, the small-diameter tip 1A get off the small-diameter flow path 3A.

As will be described later with reference to Fig. 6, if the length in the axial direction of the small-diameter tip 1A inserted into the small-diameter flow path 3A is large, flow resistance in the small-diameter flow path 3A increases, and flow rate of the hydrogen gas flowing through the small-diameter flow path 3A becomes smaller. On the other hand, when the length in the axial direction of the small-diameter tip 1A inserted into the small-diameter flow path 3A is small, flow resistance in the small-diameter flow path 3A becomes small, and flow rate of hydrogen gas flowing through the small-diameter flow path 3A becomes large. The flow rate adjustment control of hydrogen gas in the flow path adjustment section 10 will be described in detail with reference to Fig. 6 as well.

In Fig. 5, when the opening adjustment dial 4 is rotated, if the shaft 1 rotates together with the opening adjustment dial 4, the shaft 1 will not move in the axial direction (vertical direction in Fig. 5). In order to prevent the shaft 1 from rotating together with the opening adjustment dial 4 when the opening adjustment dial 4 is rotated, the co-rotation prevention mechanism 6 is provided in the flow rate adjustment valve 30. The co-rotation prevention mechanism 6 includes a co-rotation prevention member 6A and co-rotation prevention bolts 6B. Here, it is also possible to use pins instead of the co-rotation prevention bolts 6B.

The co-rotation prevention member 6A has a rotating body shape that is a combination of a hollow cylindrical upper member 6A1 and a lower member 6A2. A collar portion 6A3 extending radially outward is formed at an upper end of the upper member 6A1, and a groove 6A4 (groove of the co-rotation prevention member) extending in the shaft axial direction is formed in the lower member 6A2. Since the co-rotation prevention member 6A is attached to the main body 2 by means not shown, it does not rotate in the circumferential direction of the shaft 1.

The co-rotation prevention bolts 6B are screwed into the large diameter portion 1D of the shaft 1 from the groove 6A4 of the lower member 6A2, and a nut 6D is fitted to the other end of the bolt 6B. Since the groove 6A4 extends in the shaft axial direction, the co-rotation prevention bolts 6B and the shaft 1 are movable in the shaft axial direction (vertical direction in Fig. 5).

Inside the main body 2, a plurality of (for example, four) biasing springs 6C are provided radially outward of the co-rotation prevention member 6A at equal intervals in the circumferential direction of the shaft 1. The upper end of the biasing spring 6C (in Fig. 5) is in contact with the flange portion 6A3 fixed in the shaft axial direction, and the lower end of the biasing spring 6C is in contact with the co-rotation prevention bolt 6B. The elastic repulsive force of the biasing spring 6C that tends to expand in the shaft axial direction always acts to press the co-rotation prevention bolt 6B downward in the shaft axial direction (in Fig. 5).

A shaft rotation prevention bearing 6E is provided on the co-rotation prevention bolt 6B so as to come into contact with the groove 6A4 of the lower member 6A2. Since the shaft rotation prevention bearing 6E rotates smoothly in the circumferential direction of the co-rotation prevention bolt 6B, which assists the co-rotation prevention bolt 6B to smoothly rotate in the shaft axial direction (vertical direction in Fig. 5) within the groove 6A4 of the co-rotation prevention member 6A. Therefore, a rotation of the opening adjustment dial 4 is converted into an axial movement of the shaft 1 in the threaded portion 5A (conversion mechanism 5), and the shaft 1 is smoothly moved in the shaft axial direction (vertical direction in Fig. 5).

In Fig. 5, a movable seal 9 is arranged in the axial direction of the shaft 1 at an intermediate position between the small-diameter tip 1A and the co-rotation prevention member 6A. The movable seal 9 prevents hydrogen gas (arrow A1) that has flowed into the main body 2 from the inlet 2A from leaking along the boundary between the shaft 1 and the main body 2 in a direction opposite to the outlet 2B (downward in Fig. 5). In addition to the leakage prevention function, the movable seal 9 also has a function of supporting smooth relative movement of the shaft 1 and the main body 2 in the shaft axial direction. The movable seal 9 prevents radial movement of the shaft 1.

Further, an axial bearing 11 is arranged on the inner circumferential surface of the co-rotation prevention member 6A. With the axial bearing 11, smooth axial movement of the shaft 1 (vertical direction in Fig. 5: relative movement in the vertical direction with respect to the main body 2) is facilitated.

In Fig. 5, a rapid opening adjustment member (rapid opening adjustment button) 7 having a function of quickly moving the shaft 1 to the small-diameter tip 1A side (to the flow path adjusting section 10 side, upward in Fig. 5) is disposed to the end of the flow rate regulating valve 30 on the side opposite to the small-diameter tip 1A (the side opposite to the flow path adjusting section 10: lower in Fig. 5). The rapid opening adjustment button 7 includes a button operation part 7A and a shaft part 7B, and is fastened to a female screw formed in the base part 1B at a shaft threaded part 7C near a tip of the shaft part 7B, and the shaft part 7B is fixed to the base part 1B. Pressing the opening rapid adjustment button 7 toward the small-diameter tip 1A (upward in Fig. 5) allows the entire shaft 1 to move toward the small-diameter flow path 3A (upward in Fig. 5).

In addition to Fig. 5, with reference to Fig. 6, control of the opening degree of the flow rate regulating valve 30 or the hydrogen gas flow rate in the flow path adjusting section 10 will be described. In the state shown in Figs. 5 and 6, the flow rate regulating valve 30 is closed.

In Fig. 6 showing details of the flow path adjusting section 10, a flow path (hydrogen gas flow path) 3 is formed in the flow path forming section 2C that constitutes the region into which the small-diameter tip 1A is inserted, and the flow path forming section 2C constitutes a part of the main body 2. The flow path 3 is formed of a small-diameter flow path 3A communicating with the outlet 2B, a large-diameter flow path 3B communicating with the flow path inlet 2A, and a tapered flow path 3AT connecting them.

A tapered portion 1AT is formed on the inlet 2A side (lower side in Figs. 5 and 6) of the small-diameter tip 1A, and the inlet 2A side of the tapered portion 1AT is continuous with the shaft (shaft main body) 1.

In the state shown in Fig. 6, the small-diameter tip 1A is inserted into the small-diameter flow path 3A, and the outer circumferential surface of the tapered portion 1AT is engaged (seated) with the inner circumferential surface of the tapered flow path 3AT. Here, the tapered portion 1AT constitutes a valve body, and the tapered flow path 3AT constitutes a valve seat. In the state shown in Fig. 6, the flow rate regulating valve 30 is closed and hydrogen gas cannot pass through. In order for the tapered portion 1AT constituting the valve body to engage (seat) the tapered flow path 3AT from a state where it is not engaged with the tapered flow path 3AT, the tapered portion 1AT is required to move upward in Figs. 5 and 6 (to the outlet 2B side).

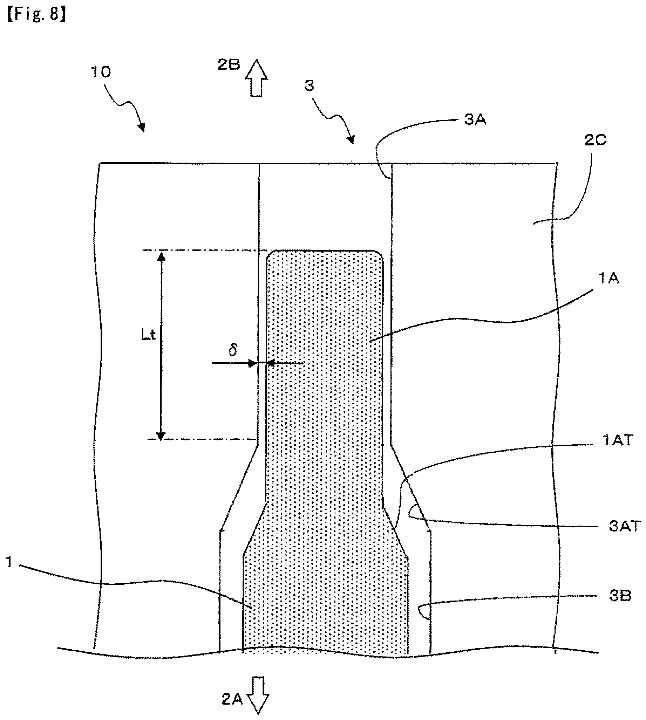

In Fig. 6, an annular gap δ with extremely small radial dimension exists between the outer circumferential surface of the small-diameter tip 1A and the inner circumferential surface of the small-diameter flow path 3A. The dimension of the gap δ in the shaft radial direction is extremely small, for example, 3% or less of the diameter of the small-diameter tip 1A. When the tapered portion 1AT forming the valve body and the tapered flow path 3AT are separated from each other, a hydrogen gas flows through the annular gap δ at a small flow rate, as will be described later with reference to Fig. 8. Further, the axial length Lt of the shaft in which the small-diameter tip 1A is inserted into the small-diameter flow path 3A is the distance (shaft axial length) through which hydrogen gas flows through the annular gap δ.

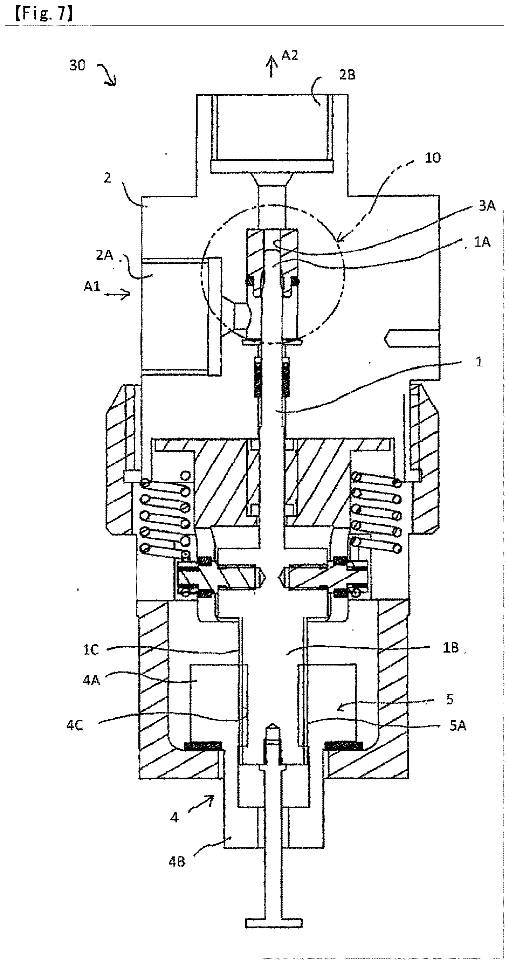

When the flow rate adjustment valve 30 shown in Figs. 5 and 6 is closed, the opening adjustment dial 4 is rotated to move the shaft 1 (small-diameter tip 1A) (downward in Fig. 5), which state is shown in Figs. 7 and 8.

In Fig. 7, the position of the threaded part 5A where the male thread 1C on the outer periphery of the base 1B and the female thread 4C of the shaft fitting part 4A of the opening adjustment dial 4 are threaded becomes the base 1B side compared to Fig. 5 (lower side in Figures 5 and 7). Since the position of the opening adjustment dial 4 in the shaft center axis direction (vertical position in Figs. 5 and 7) is fixed, when the threaded part 5A becomes the base 1B side as shown in Fig.7, the shaft 1 (small-diameter tip 1A) is located lower relative to the main body 2 compared to Fig. 5.

In Fig. 8, which shows details of the flow path adjustment section 10 in Fig. 7, since the shaft 1 (small-diameter tip 1A) has descended, the tapered portion 1AT is separated from the tapered flow path 3AT, and the flow rate adjustment valve 30 opens. Here, the axial length Lt of the shaft in which the small-diameter tip 1A is inserted into the small-diameter flow path 3A is shorter than that in Fig. 6.

In the state shown in Fig. 8, a hydrogen gas flows within the annular gap δ. The radial dimension of the gap δ is minute, and in the state of Fig. 8, the axial length Lt of the shaft 1 inserted into the small-diameter flow path 3A is long, so that the flow path resistance in the annular gap δ is large, and the flow rate of hydrogen gas flowing within the gap δ is small.

Here, when the shaft 1 (small-diameter tip 1A) is lowered compared to Fig. 8 and the axial length Lt of the shaft 1 inserted into the small-diameter flow path 3A becomes shorter (not shown), the flow path resistance at the gap δ becomes smaller, and the hydrogen gas flow rate increases. In the illustrated first embodiment, the flow rate of a hydrogen gas flowing through the annular gap δ can be finely adjusted by rotating the opening adjustment dial 4 and varying the shaft axial length Lt to vary the flow path resistance.

From the state shown in Figs. 7 and 8, when the opening adjustment dial 4 is rotated to further move the shaft 1 (small-diameter tip 1A) toward the opening rapid adjustment button 7 (the shaft 1 is further lowered in Figs. 7 and 8), as shown in Fig. 9, an end surface 1AB of the small-diameter tip 1A comes to a position where it aligns with a boundary 3C between the small-diameter flow path 3A and the tapered flow path 3AT. In other words, the shaft axial length Lt (Fig. 8) is zero.

Figure 9 shows a state of the boundary between the small flow rate area and the large flow rate area of the flow rate regulating valve 30 according to the illustrated first embodiment. The small flow rate area R1 in Figs. 3 and 4 is the state shown in Figs. 5 to 8, and the large flow rate area R2 in Figs. 3 and 4 is the state shown in Figs. 10 and 11. The state of the boundary between the small flow rate area R1 and the large flow rate area R2 is the state shown in Fig. 9. As explained with reference to Figs. 5 to 9, in the small flow rate region, moving the shaft 1 (small-diameter tip 1A) in the shaft axial direction varies the flow path resistance in the gap δ to control the hydrogen flow rate.

When the shaft 1 moves in the shaft axial direction, the rotation of the opening adjustment dial 4 is converted into movement in the axial direction by the threaded portion 5A. Therefore, the amount of movement of the shaft 1 (small-diameter tip 1A) in the shaft axial direction is small relative to the amount of rotation of the opening adjustment dial 4, allowing fine adjustment. That is, the flow rate in the small flow rate region can be finely adjusted. Here, the flow rate of hydrogen gas flowing through the gap δ is small.

Even immediately after the tapered portion 1AT is separated from the tapered flow path 3AT from the closed state of the flow rate adjustment valve 30 shown in Figs. 5 and 6, the region Lt of the minute gap δ is long and the flow path resistance is large, so that a large amount of hydrogen gas cannot flow through δ. That is, the flow rate is reliably prevented from increasing rapidly immediately after the flow rate regulating valve 30 is opened from the closed state.

Figures 10 and 11 show a state in which the characteristics of the large flow rate region R2 in Fig. 4 is realized by further lowering the shaft 1 (small-diameter tip 1A) from the state shown in Figs. 7 and 8 by rotating the opening adjustment dial 4 of the flow rate adjustment valve 30.

In Fig. 10, the end surface of the dial operation section 4B on the shaft 1 side (the upper side in Fig. 10) is indicated by the symbol 4BT, and the end surface of the base 1B on the dial operation section 4B side (the lower side in Fig. 10) is indicated by the symbol 1BB. The distance between the shaft 1 side end surface 4BT of the dial operation section 4B and the dial operation section 4B side end surface 1BB of the base 1B (distance in the axial direction of the shaft 1) is indicated by the symbol L10.

In Fig. 11 showing the flow path adjustment section 10 in Fig. 10, the end surface 1AB of the small-diameter tip 1A is located below the boundary 3C between the small-diameter flow path 3A and the tapered flow path 3AT. The cross-sectional area of the hydrogen gas flow path is constituted by the annular gap δ between the outer circumferential surface of the small-diameter tip 1A and the inner circumferential surface of the small-diameter flow path 3A in the small flow rate region of Figs. 5 to 8. However, in the state of Fig. 11 (large flow rate region), it is formed in the region between the outer circumferential surface of the small-diameter tip 1A and the inner circumferential surface of the tapered flow path 3AT. When the shaft 1 (small-diameter tip 1A) is further lowered, a hydrogen gas flow path is formed in a region between the outer circumferential surface of the small-diameter tip 1A and the inner circumferential surface of the large-diameter flow path 3B. As a result, the cross-sectional area of the hydrogen gas flow path in the states shown in Figs. 10 and 11 increases dramatically, a hydrogen gas flows at a large flow rate, and the demand for shortening the filling time can be met.

According to the illustrated embodiment, the transition from the closed state to the small flow rate state to the large flow rate state is all performed continuously by an operation of moving the small-diameter tip 1A in a direction away from the small-diameter flow path 3A. Therefore, according to the flow rate regulating valve 30 of the illustrated embodiment, through continuous and smooth operation, a hydrogen gas flows at a small flow rate immediately after closing, that is, when the valve is opened, and the small flow rate gradually increases (low flow area R1), and after the state shown in Fig. 9 (L33 in Fig. 3), the hydrogen gas flow rate increases rapidly (large flow rate region R2).

In order to switch from the high-pressure tank 21 to the ultra-high-pressure tank 22 (regions LC and LD in Fig. 4) when the flow rate adjustment valve 30 is in the large flow area shown in Fig. 10, it is necessary to rapidly reduce the opening degree of the valve 30 to reduce the flow rate of hydrogen gas.

In the illustrated first embodiment, in Fig. 10, the opening rapid adjustment button 7 is pressed toward the flow path adjustment section 10 side (small-diameter tip 1A side: upward in Fig. 10) in the shaft axial direction (in the area LC shown in Fig.4), the entire shaft 1 together with the opening adjustment dial 4 can be quickly moved toward the flow path adjustment section 10 in the shaft axial direction.

Since the dial operation part 4B of the opening adjustment dial 4 has a small-diameter cylindrical shape and passes through the opening 2D, when the opening rapid adjustment button 7 is pressed toward the small-diameter tip 1A side in the shaft axial direction (upward in Fig. 10), the dial operating section 4B moves in the shaft axial direction together with the shaft 1 without interfering with the main body.

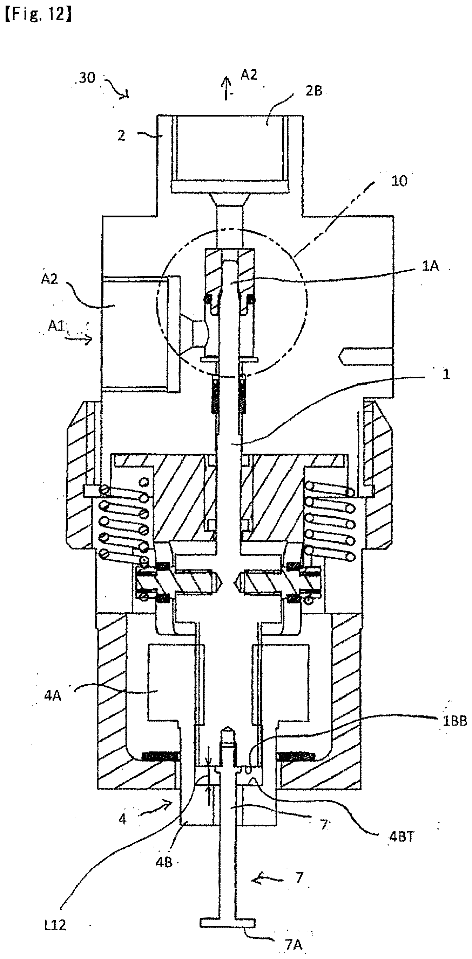

Figure 12 shows a state in which the entire shaft 1 is moved toward the flow path adjustment section 10 in the shaft axial direction (upward in Fig. 12) by operating the opening rapid adjustment button 7 (button operating section 7A). In comparison to Figs. 5, 7, and 10, in Fig. 12, the opening adjustment dial 4 (shaft fitting part 4A, dial operation part 4B) moves together with the shaft 1 toward the flow path adjustment section 10 in the shaft axial direction.

A clearance (distance in the axial direction of the shaft 1) between the end surface 4BT on the shaft 1 side (upper side in Fig. 10) of the dial operation section 4B and the end surface 1BB on the dial operation section 4B side (lower side in Fig. 10) of the base 1B is shown by the symbol L12 in Fig. 12. The opening adjustment dial 4 (shaft fitting part 4A, dial operation part 4B) is moved toward the flow path adjustment section 10 side in the shaft axial direction by the difference between the interval L10 in Fig. 10 and the interval L12 in Fig. 12. The length Lt (see Figs. 6 and 8) in which the small-diameter tip 1A is inserted into the small-diameter flow path 3A is long, the flow path resistance increases, and the flow rate of a hydrogen gas flowing through the flow rate adjustment valve 30 becomes small (the area LD in Fig. 4). Therefore, by quickly moving the entire shaft 1 toward the flow path adjustment section 10 in the axial direction of the shaft 1, the gaseous fuel supply tank can be replaced safely and smoothly.

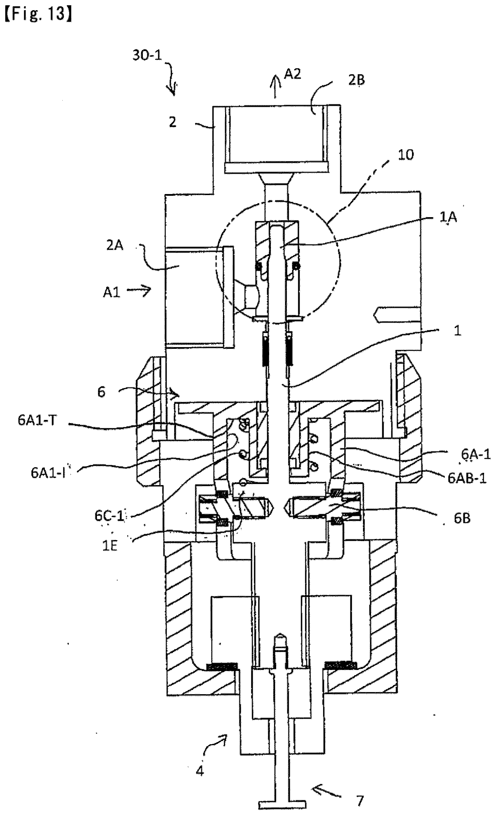

Next, referring to Fig. 13, the second embodiment of the present invention will be described.

A flow rate regulating valve according to the second embodiment is generally designated by the reference numeral 30-1 in Fig. 13. The flow rate regulating valve 30-1 shown in Fig. 13 is in a closed state. In the following description of the second embodiment, only configurations that are different from the first embodiment will be described, and descriptions of the same configurations as the first embodiment will be omitted.

In Fig. 13, in the flow rate adjustment valve 30-1 according to the second embodiment, a biasing spring 6C-1 disposed in the co-rotation prevention mechanism 6 has a different configuration from the biasing springs 6C of the co-rotation prevention mechanism 6 of the flow rate adjustment valve 30 in the first embodiment (Figs. 5 to 12).

In the first embodiment shown in Figs. 5 to 12, a plurality of biasing springs 6C are provided at equal intervals in the circumferential direction of the shaft. In contrast, in the second embodiment shown in Fig. 13, a single biasing spring 6C-1 is provided in a hollow portion of the co-rotation prevention member 6A-1. The biasing spring 6C-1 is arranged to surround the shaft surrounding portion 6AB-1.

The biasing spring 6C-1 has one end in contact with the bottom surface 6A1-T (upper end surface: closed surface) of the hollow portion 6A1-T in the co-rotation prevention member 6A-1, and the other end in contact with the flange 1E formed on the shaft 1. The biasing spring 6C-1 constantly biases the shaft flange portion 1E toward the opening adjustment dial 4 side (lower side in Fig. 13) in the shaft axial direction. Other configurations and effects of the second embodiment shown in Fig. 13 are the same as those of the first embodiment shown in Figs. 5 to 12.

The illustrated embodiments are merely examples, and are not intended to limit the technical scope of the present invention. For example, the flow rate regulating valve of the present invention can be used in a filling device that fills devices other than FCVs with gaseous fuels other than hydrogen, and furthermore, can be used for gases other than fuel.

### [Explanation of symbols]

1 shaft
1A small-diameter tip
1AT tapered portion
1B base
1C male thread
2 main body
3 flow path
3A small-diameter flow path
3AT tapered flow path
4 opening adjustment rotating member (opening adjustment dial)
4C female thread
5 conversion mechanism
5A threaded part
6 co-rotation prevention mechanism
6A co-rotation prevention member
6B co-rotation prevention bolts
7 rapid opening adjustment member (rapid opening adjustment button)
10 flow path adjustment section
30 flow rate adjustment valve
δminute gap

## Claims

1. A flow rate regulating valve comprising:
a main body having a small-diameter flow path, a tapered flow path continuous with the small-diameter flow path, and a large-diameter flow path continuous with the tapered flow path;
a shaft having a small-diameter tip that can be inserted into the small-diameter flow path from the large-diameter flow path side of the main body, and a tapered portion continuous with the small-diameter tip;
an opening adjustment rotating member; and
a conversion mechanism that converts rotation of the opening adjustment rotating member into movement in an axial direction of the shaft,
wherein when the small-diameter tip of the shaft is inserted into the small-diameter flow path of the main body, a gap is formed between an outer circumferential surface of the small-diameter tip and an inner circumferential surface of the small-diameter flow path, and an outer circumferential surface of the tapered portion of the shaft is configured to be engageable with an inner circumferential surface of the tapered flow path of the main body.

2. The flow rate regulating valve as claimed in claim 1, wherein the conversion mechanism includes a threaded portion between a female thread formed on the opening adjustment rotation member and a male thread formed on the shaft.

3. The flow rate regulating valve as claimed in claim 1 or 2 further comprising a co-rotation prevention mechanism that prevents the shaft from co-rotating with the opening adjustment rotating member when the opening adjustment rotating member is rotated.

4. The flow rate regulating valve as claimed in claim 1, 2 or 3 further comprising a rapid opening adjustment member that moves the shaft toward the small-diameter tip.
